# EUROPÄISCHE PATENTSCHRIFT

(11) **EP 0 944 992 B1**
(45) Veröffentlichungstag und Bekanntmachung des Hinweises auf die Patenterteilung: **28.05.2008**
(21) Anmeldenummer: 97953716.4
(22) Anmeldetag: 29.11.1997
(51) Int. Cl.: H04M 11/00, H04L 9/32

(54) **VERFAHREN UND VORRICHTUNG ZUM FERNBEDIENEN UND FERNSTEUERN VON EINRICHTUNGEN UND GERÄTEN ÜBER EIN TELEFONNETZ**
METHOD AND DEVICE FOR THE REMOTE OPERATION AND REMOTE CONTROL OF SYSTEMS AND APPARATUS VIA A TELEPHONE NETWORK
PROCEDE ET DISPOSITIF POUR UTILISER ET COMMANDER A DISTANCE DES DISPOSITIFS ET DES APPAREILS PAR L'INTERMEDIAIRE D'UN RESEAU TELEPHONIQUE

(30) Priorität: 10.12.1996 DE 19653713
(43) Veröffentlichungstag der Anmeldung: 29.09.1999
(73) Patentinhaber: Deutsche Telekom AG, 53113 Bonn (DE)
(72) Erfinder: STOLZ, Helmut, D-57080 Siegen (DE)
(86) Internationale Anmeldenummer: PCT/EP1997/006663
(87) Internationale Veröffentlichungsnummer: WO 1998/026569

(56) Entgegenhaltungen:
- EP-A- 0 637 004
- DE-A- 4 325 459
- FR-A- 2 680 592
- US-A- 5 119 412

## Beschreibung

Die Erfindung bezieht sich auf ein Verfahren zum Fernbedienen und Fernsteuern von an einer Zentralstation angeschalteten Einrichtungen und Geräten über ein Telefonnetz sowie auf eine Vorrichtung zur Durchführung des Verfahrens.

Derartige Verfahren und Vorrichtungen sind zum Beispiel aus UK Patent Application GB 222 30 163 A, DE 36 24 162 A1 und DE 42 28 071 A1 bekannt.

Diese Verfahren und Vorrichtungen dienen dazu, beliebige Einrichtungen und Geräte in Haushalten, Büroräumen, Unternehmungen usw. über ein Telefonnetz zu bedienen und zu steuern. Verfahrensweise, Aufbau und der Autorisierungsmechanismus ähneln denen, die bei der Fernabfrage und Steuerung von Telefon-Anrufbeantwortern üblich sind.

Als Autorisierungsmechanismus wird ein Password-Verfahren verwendet, beispielsweise eine Ziffer als MFV-Wahlzeichen, und die Nutzinformationen werden im Klartext übermittelt. Ein unautorisierter Benutzer kann mittels bekannter Verfahren die Nutzinformationen manipulieren. Außerdem kann er sich in den Besitz der Autorisierungsmechanismen bringen (durch Aufzeichnung der Kommunikation) und selbständig neue Verbindungen aufbauen, ohne den originären Benutzer persönlich zu kompromittieren.

Aus der FR-A-26 80 592 ist ein Fernbedienungssystem zur Fernbedienung von Haushaltsgeräten über ein öffentliches Terminal bekannt, wobei die Übertragung von Steuerdaten über ein öffentliches Telefonnetz in verschlüsselter Form erfolgt. Hierzu wird eine IC-Karte mit einer Verschlusselungseinrichtung in das öffentliche Terminal eingesetzt, um vom Terminal auszusendende Steuerinformationen verschlüsseln zu können. Die zu steuernden Haushaltsgerate sind über ein Haushaltsterminal mit dem öffentlichen Netz verbunden, welches eine Entschlüsselungseinrichtung aufweist, mit der die verschlüsselt übertragenen Steuerinformationen entschlüsselt werden können. Die entschlüsselten Steuerinformationen werden anschließend den Haushaltsgeräten zugeführt. Zur Überprüfung der Identität der IC-Karte wird eine gegenseitige Autorisierung zwischen dem Haushaltsterminal und der IC-Karte durchgeführt, wobei hierfür ein asymmetrisches Verschlüsselungsverfahren zur Anwendung kommt. Auch die verschlüsselt übertragenen Steuerdaten werden wiederum nach einem asymmetrischen Verschlüsselungsmechanismus in der IC-Karte verschlüsselt bzw. in dem Haushaltsterminal entschlüsselt.

Die DE-A-43 25 459 offenbart ein Verfahren zur Kommunikation zwischen einem Tongeber und einem Zentralrechner über eine Telefonleitung. Zur Identifikation eines Benutzers sowie zur sicheren Übertragung von Überweisungsdaten wird entweder die PASS-Methode oder das Challenge/Response-Verfahren verwendet, bei denen es sich um aufwendige und daher teure asymmetrische Verschlüsselungsverfahren handelt.

Der Erfindung liegt daher die Aufgabe zu Grunde, ein Verfahren und eine Vorrichtung zum Fernbedienen und Fernsteuern von Einrichtungen und Geräten über ein Telefonnetz zu schaffen, mit denen auf einfache und kostengünstige Art und Weise eine Autorisierung des Benutzer als auch eine Sicherung übertragener Nutzinformationen vor unberechtigtem Zugriff und gezielter Manipulation gewährleistet werden kann.

Die Erfindung löst dieses technische Problem zum einen mit den Verfahrensschritten des Anspruchs 1 und zum anderen mit den Merkmalen des Anspruchs 4.

Vorteilhafte Weiterbildungen sind in Unteransprüchen angegeben.

Die Erfindung wird nachfolgend anhand von Ausführungsbeispielen näher erklärt. In den zugehörigen Zeichnungen zeigen die
- Fig. 1: eine Prinzipskizze der bekannten Vergleichs lösungen,
- Fig. 2: eine Prinzipskizze einer Zentralstation und
- Fig. 3: eine Prinzipskizze einer Außenstelle eines Benutzers.

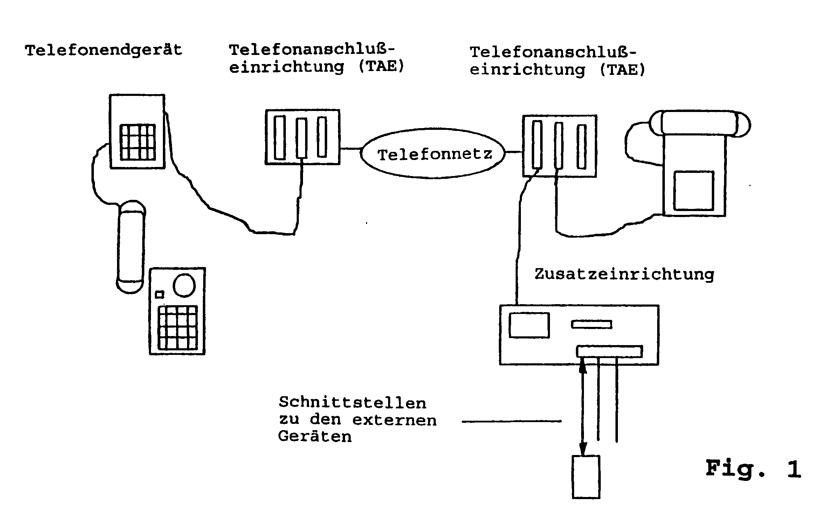

Die bekannten Vergleichslösungen, entsprechend Fig. 1, bedürfen keiner ausführlichen Erklärung, wenn sie mit der allgemein bekannten Fernabfrage eines Anrufbeantworters verglichen werden. Am Telefonendgerät des Benutzers wird, soweit dieses nicht für MFV-Wahl vorgesehen ist, ein MFV-Geber akustisch angekoppelt. Als Autorisierungsmechanismus dient die eingegebene Ziffer, durch die hier, anstelle eines Anrufbeantworters, eine Zusatzeinrichtung eingeschaltet wird. Deren ausgangsseitige Schnittstellen werden mit nachfolgenden offenen Zeichen gesteuert.

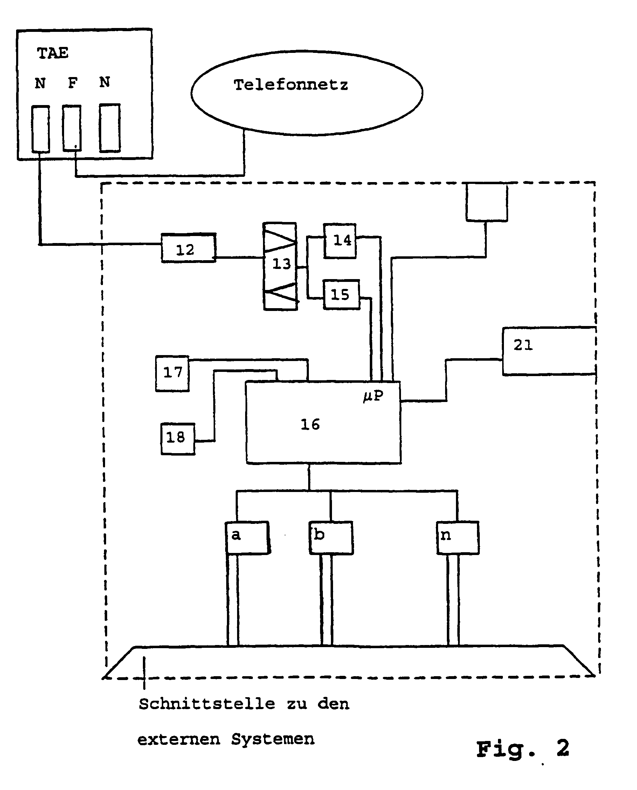

Die Zusatzeinrichtung (einer Zentralstation Z) für analoge Fernsprechanschlüsse nach Fig. 2 besteht aus einer Anschlußeinheit für Telefonnetz TAE, einem Übertrager mit Rufstromunterdrückung 12, Verstärker 13, einem Empfänger/Decodierer für die MFV-Zeichen 14, bei vorgesehener Rückinformation einem MFV-Sender DTMF (Dual Tone Multiple Frequence) 15, einem Kleinrechner 16, einer Tastatur 17, einem Display 18 (Anzeigefeld), einem Speicher und Vergleicher 21 für verschlüsselte Berechtigungssignale, sowie Schaltgliedern a, b, bis n mit ihren Schnittstellen für die Steuerung von diversen Adaptern.

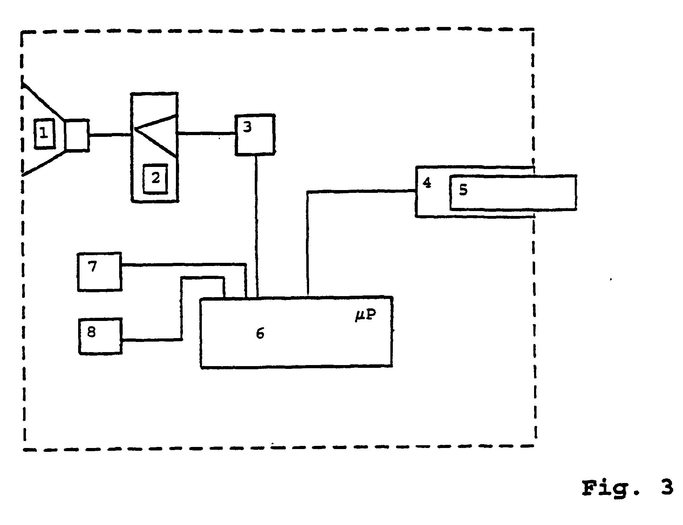

Eine Endeinrichtung für Benutzer besteht, entsprechend Fig. 3, aus einem Lautsprecher 1, einem Verstärker 2, einem Sender für DTMF (Dual Tone Multiple Frequence)-Zeichen 3, einer Aufnahme für Sicherheitsmodul 4, einem personalisierten Sicherheitsmodul 5, einem Kleinrechner 6, einer Tastatur 7, optional einer Anzeigeeinheit (Display) 8 und einer Batterie.

Die zur Initialisierung der einzelnen Funktionen benutzten Mehrfrequenzsender entfalten zusätzlich eine Aufnahme- und Leseeinrichtung für personalisierbare Sicherheitsmodule (SM), z. B. eine personalisierbare CPU-Chipkarte (ICC) und eine Sicherheitssoftware, um die SM anzusprechen.

Der Benutzer erhält ein personalisiertes SM. Als logische= Zugriffsschutz zum SM kann ein PIN (personal identification number)-Mechanismus verwendet werden. (Damit besteht das persönliche Identifikationsmerkmal aus den Komponenten "Wissen" und "Besitz".) Das personalisierte SM enthält unauslesbar gespeicherte individuelle kryptografische Schlüssel. Das SM verschlüsselt und entschlüsselt u. a. die Nutzinformationen und wird für die gegenseitige Authentikation Benutzer und zentrale Einrichtung verwendet.

Die zentrale Einrichtung erhält ebenfalls zusätzlich eine Aufnahme- und Leseeinrichtung für personalisierbare Sicherheitsmodule (SM), z. B. eine personalisierbare CPU-Chipkarte (ICC) und eine Sicherheitssoftware, um die SM anzusprechen.

Das SM im Mehrfrequenzsender und in der Zentraleinrichtung besitzen identische kryptographische Schlüssel für diesen Benutzer. Das heißt, für jede Kombination Benutzer SM und SM in der Zentraleinrichtung werden individuelle Schlüssel benutzt.

Die Informationsinhalte für Verbindungseröffnung usw. sind in der Zentraleinrichtung programmierbar.

Der Benutzer steckt sein personalisiertes Sicherheitsmodul SM (z. B. eine Chipkarte) in seinen Mehrfrequenzsender und gibt seine PIN (Personal Identifikation Number) ein. Die PIN wird zum SM gesendet und dort verifiziert. Bei richtiger PIN ist der Zugang zum SM geöffnet und am Mehrfrequenzsender wird ein akustisches oder optisches Signal gesetzt (z. B. eine Leuchtdiode oder ein Ton bestimmter Frequenz). Nun wählt der Benutzer die entsprechende Verbindung zu seiner Zentralstation (am Telefonnetz angeschlossen) und diese sendet einen ersten Bereitton. Daraufhin initiiert der Benutzer eine Verbindungseröffnungsinformation (Befehlssequenz 1). Diese Sequenz wird in seinem SM mit seinem personalisierten kryptographischen Schlüssel verschlüsselt und als verschlüsselte Information zur Zentralstation gesendet. Diese entschlüsselt die empfangene Information und vergleicht diese mit der hier gespeicherten. Bei positivem Ergebnis sendet die Zentraleinrichtung einen weiteren "Bereitton". Nun kann der Benutzer die entsprechenden Befehle initiieren, die dann nach Verschlüsselung in seinem SM zur Zentralstation gesendet werden. Diese sendet dann die Befehle an die entsprechenden Einrichtungen.

Ein möglicher Angreifer kann die verschlüsselte Information nicht gezielt verändern, jedoch wird u. U. eine Veränderung der Nutzinformation vom Benutzer nicht bemerkt.
Dieser Mangel kann zusätzlich wie folgt abgestellt werden:
Nach Empfang des zweiten "Bereittons" initiiert der Benutzer die entsprechenden Befehle. Diese werden im Klartext und zusätzlich nach Verschlüsselung in seinem SM verschlüsselt zur Zentralstation gesendet. Diese bildet nun von der Klartextinformation nochmals das verschlüsselte Produkt und vergleicht dieses mit dem empfangenen verschlüsselten Produkt und gibt den entsprechenden Befehl nur bei positiven Prüfergebnis an die entspr. Einrichtungen weiter. Mit einer Rückmeldung der Befehle und Ergebnisse von der Zentralstation Z zum Benutzer X kann eine weitere Erhöhung der Sicherheit erreicht werden.

## Patentansprüche

1. Verfahren zum Fernbedienen und Fernsteuern von an einer Zentralstation angeschalteten Einrichtungen und Geräten mittels MFV-Wahl von einer beliebigen Anschlußstelle aus über ein Telefonnetz, wobei den Einrichtungen und Geräten Adapter zugeordnet sind die Zustandsabfragen und/oder Betätigungen initiieren,
mit folgenden Verfahrenschritten:
a) Herstellen einer Verbindung zur Zentralstation von einer beliebigen Anschlußstelle aus, mit der eine Endeinrichtung für einen Benutzer, die ein einen personalisierten kryptografischen Schlüssel enthaltendes Sicherheitsmodul aufweist, verbunden ist;
b) die Zentralstation, in der der identische personalisierte kryptografische Schlüssel gespeichert ist, sendet ein erstes Bereitsignal zur Anschlußstelle;
c) Übertragen einer mit dem personalisierten kryptografischen Schlüssel gebildeten verschlüsselten Information, mit der sich der Benutzer gegenüber der Zentralstation vor seiner MFV-Wahl ausweist, zur Zentralstation;
d) Entschlüsseln der empfangenen Information mit dem personalisierten kryptografischen Schlüssel;
e) Vergleichen der entschlüsselten Information mit einer in der Zentralstation gespeicherten Information auf Übereinstimmung;
**f)** bei Übereinstimmung sendet die Zentralstation ein zweites Bereitsignal zur Anschlußstelle und;
**g)** unter Ansprechen auf das zweite Bereitsignal werden vom Benutzer Befehle, insbesondere hinsichtlich Adapter und Betätigungsart an der Endeinrichtung initiiert und nach Verschlüsselung mit dem personalisierten kryptografischen Schlüssel zur Zentralstation gesendet;
**h)** die verschlüsselten Befehle werden in der Zentralstation mit dem personalisierten kryptografischen Schlüssel entschlüsselt und wenigstens zu einer Einrichtung oder einem Gerät übertragen.

2. Verfahren nach Anspruch 1, **dadurch gekennzeichnet,daß** die in Schritt h) entschlüsselten Befehle durch Zustandsignale oder ein weiteres Bereitsignal quittiert werden.

3. Verfahren nach Anspruch 1 oder 2, **dadurch gekennzeichnent, daß**
in Schritt g) die vom Benutzer initiierten Befehle auch im Klartext zur Zentralstation gesendet werden; daß die empfangenen Befehle im Klartext mit dem personalisierten kryptografischen Schlüssel verschlüsselt und mit den empfangenen verschlüsselten Befehlen auf Übereinstimmung verglichen werden, und daß in Schritt h) die entschlüsselten Befehle nur bei Übereinstimmung zu dem oder den entsprechenden Einrichtungen und Geräten weitergeleitet werden.

4. Vorrichtung zur Durchführung des Verfahrens nach einem der Ansprüche 1 bis 3 mit folgenden Merkmalen:
a) eine mit einem Telefonnetzes verbindbare Endeinrichtung für einen Benutzer umfassend
- einen Lautsprecher,
- einen Sender (3) für DTMF-Zeichen,
- eine Aufnahme- und Leseeinrichtung (4) für ein Sicherheitsmodul (5),
- einen Kleinrechner (6),
- eine Tastatur (7),
b) eine Zentralstation mit
- einer Anschlußeinheit zum Anschalten an ein Telefonnetz,
- einer Aufnahme- und Leseeinrichtung für ein Sicherheitsmodul,
- zugeordneten Adaptern zum Anschalten von Einrichtungen und Geräten,
c) ein personalisiertes Sicherheitsmodul (5) zum Einsetzen in die Endeinrichtung, und
d) ein Sicherheitsmodul zum Einsetzen in die Zentralstation
**dadurch gekennzeichnet, daß**
die Zentralstation aufweist:
- einen Speicher (21) zum Ablegen einer Verbindungs-Eröffnungsinformation,
- eine Vergleichseinrichtung (21) zum Vergleichen der von der Endeinrichtung übertragenen Verbindungs-Eröffnungsinformation mit der gespeicherten Verbindungs-Eröffnungsinformation, und
- eine Einrichtung zum Erzeugen eines Bereitsignals für die Endeinrichtung bei Übereinstimmung der entschlüsselten Verbindungs-Eröffnungsinformation mit der gespeicherten Verbindungs-Eröffnungsinformation, daß das personalisierte Sicherheitsmodul zum Einsetzen in die Endeinrichtung einen personalisierten kryptografischen Schlüssel zum Verschlüsseln von Befehlen und der Verbindungs-Eröffnungsinformation und das Sicherheitsmodul zum Einsetzen in die Zentralstation den gleichen personalisierten kryptografischen Schlüssel zum Entschlüsseln der von der Endeinrichtung kommenden Befehle und Verbindungs-Eröffnungsinformation enthält, und daß
die Endeinrichtung mit einer beliebigen Anschlußstelle des Telefonnetzes verbindbar ist.

## Claims

1. Method for remote operation and remote control, through a telephone network, of devices and equipment connected to a central station from any desired terminal location by means of DTMF dialing, wherein adapters that initiate status queries and/or operations are associated with the devices and equipment,
having the following method steps:
a) setting up a connection to the central station from any desired terminal location to which is connected a terminal device for a user, said terminal device having a security module containing a personalized cryptographic key;
b) the central station, in which the identical personalized cryptographic key is stored, transmits a first ready signal to the terminal location;
c) transmission to the central station of a set of information, encrypted with the personalized cryptographic key, with which the user identifies himself to the central station prior to his DTMF dialing;
d) decrypting the received information with the personalized cryptographic key;
e) comparing the decrypted information with a set of information stored in the central station to identify a match; and
f) in the case of a match, the central station transmits a second ready signal to the terminal location; and
g) in response to the second ready signal, commands, in particular concerning the adapter and type of operation, are initiated by the user at the terminal device, and are transmitted to the central station after encryption with the personalized cryptographic key;
h) the encrypted commands are decrypted in the central station using the personalized cryptographic key and are transmitted to at least one device or piece of equipment.

2. Method according to claim 1, **characterized in that** the commands decrypted in step h) are acknowledged by status signals or an additional ready signal.

3. Method according to claim 1 or 2, **characterized in that** the commands initiated by the user in step g) are also transmitted to the central station in plaintext; **in that** the received commands in plaintext are encrypted with the personalized cryptographic key and are compared with the received encrypted commands to identify a match, and **in that** in step h) the decrypted commands are only forwarded to the corresponding device and equipment or devices and equipment if there is a match.

4. Device for carrying out the method according to any one of claims 1 through 3, having the following features:
a) a terminal device for a user, connectable to a telephone network, including
- a loudspeaker,
- a transmitter (3) for DTMF symbols,
- a recording and reading device (4) for a security module (5),
- a small computer (6),
- a keyboard (7),
b) a central station having
- a line unit for connecting to a telephone network,
- a recording and reading device for a security module,
- associated adapters for connecting to devices and equipment,
c) a personalized security module (5) for use in the terminal device, and
d) a security module for use in the central station,
**characterized in that**
the central station has:
- a memory (21) for storing a set of connection setup data,
- a comparison unit (21) for comparing the connection setup data transmitted by the terminal device to the stored connection setup data, and
- a device for generating a ready signal for the terminal device in the case of a match between the decrypted connection setup data and the stored connection setup data,
**in that** the personalized security module for use in the terminal device contains a personalized cryptographic key for encrypting commands and the connection setup data, and the personalized security module for use in the central station contains the same personalized cryptographic key for decrypting the commands and connection setup data arriving from the terminal device, and
**in that** the terminal device can be connected to any desired terminal location of the telephone network.

## Revendications

1. Procédé d'utilisation et de commande à distance d'équipements et appareils connectés à une station centrale, moyennant une numérotation multifréquence à partir d'un point de raccordement quelconque, par l'intermédiaire d'un réseau téléphonique, des adaptateurs qui déclenchent des interrogations d'état et/ou des activations étant associés aux équipements et appareils,
comprenant les étapes suivantes:
a) établissement d'une liaison vers la station centrale à partir d'un point de raccordement quelconque auquel est relié un terminal pour un utilisateur, ledit terminal comportant un module de sécurité qui contient une clé cryptographique personnalisée;
b) la station centrale dans laquelle est enregistrée la clé cryptographique personnalisée identique envoie un premier signal « prêt » au point de raccordement ;
c) transmission à la station centrale d'une information cryptée formée à l'aide de la clé cryptographique personnalisée, permettant à l'utilisateur de s'identifier vis-à-vis de la station centrale avant sa numérotation multifréquence;
d) décryptage de l'information reçue à l'aide de la clé cryptographique personnalisée;
e) comparaison de l'information décryptée avec une information enregistrée dans la station centrale pour en vérifier la concordance ;
f) en cas de concordance, la station centrale envoie un deuxième signal « prêt » au point de raccordement et ;
g) en réponse au deuxième signal « prêt », l'utilisateur déclenche des commandes, notamment concernant l'adaptateur et le mode d'activation au niveau du terminal et les envoie à la station centrale après cryptage à l'aide de la clé cryptographique personnalisée ;
h) les commandes cryptées sont décryptées dans la station centrale à l'aide de la clé cryptographique personnalisée et transmises à au moins un équipement ou appareil.

2. Procédé selon la revendication 1, **caractérisé en ce que**
les commandes décryptées au cours de l'étape h) sont acquittées par des signaux d'état ou un autre signal « prêt ».

3. Procédé selon la revendication 1 ou 2, **caractérisé en ce que,**
au cours de l'étape g), les commandes déclenchées par l'utilisateur sont également envoyés en texte clair à la station centrale ; **en ce que** les commandes reçues en texte clair sont cryptées à l'aide de la clé cryptographique personnalisée et comparées avec les commandes cryptées reçues pour en vérifier la concordance et **en ce que**, au cours de l'étape h), les commandes décryptées ne sont acheminées vers le ou les équipements et appareils correspondants qu'en cas de concordance.

4. Dispositif pour la mise en oeuvre du procédé selon l'une quelconque des revendications 1 à 3 ayant les caractéristiques suivantes :
a) un terminal pour un utilisateur, apte à être relié à un réseau téléphonique, comprenant
- un haut-parleur,
- un émetteur (3) de caractères DTMF,
- un dispositif de réception et de lecture (4) pour un module de sécurité (5),
- un mini-ordinateur (6),
- un clavier (7),
b) une station centrale comprenant
- une unité de raccordement pour la connexion à un réseau téléphonique,
- un dispositif de réception et de lecture pour un module de sécurité,
- des adaptateurs associés pour la connexion d'équipements et d'appareils,
c) un module de sécurité (5) personnalisé destiné à être mis en place dans le terminal, et
d) un module de sécurité destiné à être mise en place dans la station centrale,
**caractérisé en ce que**
la station centrale comporte:
- une mémoire (21) pour le stockage d'une information d'ouverture de liaison,
- un système de comparaison (21) pour comparer l'information d'ouverture de liaison transmise par le terminal avec l'information d'ouverture de liaison enregistrée, et
- un système pour générer un signal « prêt » pour le terminal en cas de concordance entre l'information d'ouverture de liaison décryptée et l'information d'ouverture de liaison enregistrée, **en ce que** le module de sécurité personnalisé destiné à être mis en place dans le terminal contient une clé cryptographique personnalisée pour le cryptage de commandes et de l'information d'ouverture de liaison, et **en ce que** le module de sécurité destiné à être mis en place dans la station centrale contient la même clé cryptographique personnalisée pour le décryptage des commandes et de l'information d'ouverture de liaison venant du terminal, et **en ce que**
le terminal est apte à être relié à un point de raccordement quelconque du réseau téléphonique.
